# EUROPÄISCHE PATENTSCHRIFT

(11) **EP 0 523 396 B1**
(45) Veröffentlichungstag und Bekanntmachung des Hinweises auf die Patenterteilung: **17.01.1996**
(21) Anmeldenummer: 92110433.7
(22) Anmeldetag: 20.06.1992
(51) Int. Cl.: G21C 9/004

(54) **Vorrichtung zur Überwachung der Kaminluft in einer Reaktoranlage**
Device for monitoring stack exhaust air of a reactor installation
Dispositif de surveillance de l'air d'éventage dans la cheminée d'une installation comportant un réacteur

(30) Priorität: 18.07.1991 CH 2152/91
(43) Veröffentlichungstag der Anmeldung: 20.01.1993
(73) Patentinhaber: ASEA BROWN BOVERI AG, CH-5401 Baden (CH)
(72) Erfinder: Labno, Leszek, CH-5415 Nussbaumen (CH); Schegk, Claus-Detlef, Dr., CH-5313 Klingnau (CH)

(56) Entgegenhaltungen:
- DE-A- 3 637 845
- PATENT ABSTRACTS OF JAPAN vol. 13, no. 200 (P-869)(3548) 12. Mai 1989 & JP-A-1020496
- PATENT ABSTRACTS OF JAPAN vol. 1, no. 128 (M-043)24. Oktober 1977 & JP-A-52064591
- PATENT ABSTRACTS OF JAPAN vol. 8, no. 223 (P-307)(1660) 12. Oktober 1984 & JP-A-59104584
- PATENT ABSTRACTS OF JAPAN vol. 14, no. 44 (P-996)(3987) 26. Januar 1990 & JP-A-1276087
- PATENT ABSTRACTS OF JAPAN vol. 3, no. 155 (E-160)19. Dezember 1979 & JP-A-54135595
- PATENT ABSTRACTS OF JAPAN vol. 13, no. 185 (P-865)(3533) 2. Mai 1989 & JP-A-1013489

## Beschreibung

### Technisches Gebiet

Die Erfindung betrifft eine Vorrichtung zur Überwachung der Kamin-Fortluft in einer Reaktoranlage, im wesentlichen bestehend aus einer Druckentlastungsleitung, welche den Sicherheitsbehälter mit dem Kamin verbindet und in welcher eine Filteranlage angeordnet ist, wobei stromabwärts des Filters eine Probeentnahme vorgesehen ist, aus der Gasgemisch über eine Entnahmeleitung abgezweigt wird, durch eine Messstrecke geleitet wird und anschliessend zur Kamin-Fortluft zurückgeführt wird.

### Stand der Technik

Die Atmosphäre im Sicherheitsbehälter einer Kernkraftanlage besteht in der Regel aus Luft, Wasserdampf, Wasserstoff, CO₂, Edelgasen, Jod und Aerosolen. Im Normalbetrieb der Anlage wir dieses Gemisch, welches eine Aktivität von ca. 10³ Bq/m³ aufweist, aus dem Sicherheitsbehälter über eine Belüftungsanlage direkt in den Kamin abgeleitet. Im Störfall mit kleiner Leckage im Primärsystem, bei welcher die Aktivität zwischen 10³ Bq/m³ und 10⁸ Bq/m³ beträgt, wird das Gas ebenfalls über die Belüftungsanlage direkt in den Kamin abgeleitet. Bei einem grösseren Störfall mit beispielsweiser Kernschmelze kann die Aktivität grösser als 10¹⁴ Bq/m³ werden. Die Belüftungsanlage wird beim grösseren Störfall abgesperrt, worauf der Druck im Sicherheitsbehälter ansteigt. Zur Vermeidung eines zu hohen Druckanstiegs wird der Sicherheitsbehälter über eine Filteranlage entlastet. In dieser Filteranlage (bspw. Trockenfilter, Nassfilter) wird die Aktivität von Jod und Aerosolen um mindestens den Faktor 1000 herabgesetzt. Stromabwärts der Filteranlage wird danach die Aktivität des Gases in einer Messstrecke bestimmt.

Wegen verbleibender sehr hoher Aktivität in der anschliessenden, zum Kamin führenden Reingasleitung können im Störfall die für den Normalbetrieb verwendeten Messapparaturen wie Bilanzierungsfilter und Aerosolmonitor nicht eingesetzt werden, da der Messbereich überschritten würde und die Handhabung des Bilanzierungsfilters nicht gewährleistet wäre. Deshalb gelangen üblicherweise Sonderinstrumente mit einem höheren Messbereich und aufwendigen Abschirmungen sowie komplizierte Vorrichtungen für die Handhabung des Bilanzierungsfilters zur Anwendung.

### Darstellung der Erfindung

Die Erfindung versucht diese Nachteile zu vermeiden. Ihr liegt ihr Aufgabe zugrunde, bei einer Anlage der eingangs genannten Art auch im Störfall die Anlage mit den vorhandenen Messinstrumenten und Apparaten zu betreiben.

Erfindungsgemäss wird dies dadurch erreicht, dass die Aktivitäts-Konzentration des Gases vor der Messstrecke in einer Verdünnungsanlage reduziert wird.

Die Vorteile der Erfindung sind unter anderem im Wegfall der bisher üblichen starken Abschirmungen der gesamten Messstrecke zu sehen. Auch die Abschirmung für den Transport des zu vermessenden Bilanzierungsfilters entfällt, wodurch die Gefährdung des Betriebspersonals stark reduziert ist.

Es ist besonders zweckmässig, wenn die Gasprobe in der Entnahmeleitung vor der Verdünnung mittels einer Heizung vor dem Abkühlen geschützt wird. Dadurch wird zum einen Wasserdampfkondensation in der Entnahmeleitung und in der Messstrecke und eine damit verbundene Falschmessung infolge Ausscheidens von Jod und Aerosolen vermieden.

### Kurze Beschreibung der Zeichnung

In der Zeichnung ist ein Ausführungsbeispiel der Erfindung anhand des abluftseitigen Teils einer Druckwasser-Reaktor-anlage dargestellt.

Es zeigen:
- Fig.l: ein vereinfachtes Schaltbild eines abluftseitigen Teils einer Reaktoranlage;

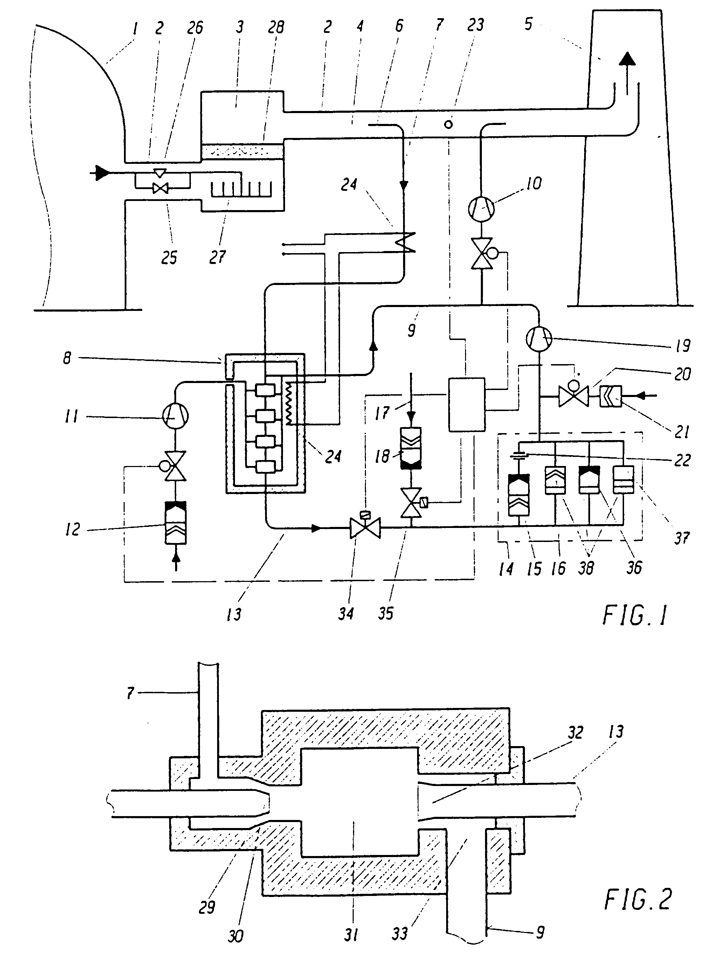

- Fig.2: die Prinzipskizze einer Verdünnungsstufe.

Es sind nur die für das Verständnis der Erfindung wesentlichen Elemente gezeigt. Nicht dargestellt sind von der Reaktoranlage beispielsweise die ganzen Primär- und Sekundär-teile. Die Strömungsrichtung der Arbeitsmittel sind mit Pfeilen bezeichnet.

### Weg zur Ausführung der Erfindung

In der Figur 1 ist der Sicherheitsbehälter des Reaktors mit 1 bezeichnet. Eine Druckentlastungsleitung 2, nachstehend in ihrem ersten Teil Rohgasleitung genannt, führt vom Sicherheitsbehälter zur Filteranlage 3. In der Rohgasleitung sind in zwei parallelen Strängen eine Regelarmatur 25 und eine Berstscheibe 26 zur definierten Druckentlastung angeordnet.

In der Rohgasleitung findet ebenfalls eine nichtdargestellte Durchsatzmessung statt. Die Filteranlage arbeitet im Beispielsfall nach dem Nassfilterprinzip; der Filtertyp ist für die Anwendung der Erfindung belanglos. In Venturi-Einbauten 27 wird das Wasser zerstäubt und reinigt dabei die Gase. Danach durchströmen die gereinigten Gase einen Wasserabscheider 28. Sie treten dann in den zweiten Teil der Druckentlastungsleitung 2, nachstehend Reingasleitung 4 bezeichnet, ein, welche zum Kamin 5 führt.

In der Reingasleitung 4 ist eine Probeentnahme 6 angeordnet, aus der kontinuierlich eine Gasprobe entnommen und in eine Entnahmeleitung 7 eingeleitet wird. Die Entnahme könnte auch aus einem Fortluftkanal oder Fortluftkamin stromab der Einmündung der Reingasleitung in eine solche erfolgen. Als Beispiel sei angeführt, dass bei einer gesamten Abgasmenge von 20.000 m³/h etwa 10 m³/h abgezweigt werden. Diese Gasprobe wird mittels einer elektrisch oder durch Wärmeaustausch betriebenen Heizung 24 über vorzugsweise die ganze Länge der Entnahmeleitung 7 beheizt, um Kondensation zu vermeiden.

Aus der Entnahmeleitung wird ein Teilstrom der Verdünnungsanlage 8. zugeführt. Diese mehrstufig ausgebildete Anlage arbeitet mit einem bestimmten Volumenstrom partikelfreier Druckluft. Diese wird in einem Verdichter 11 bereitgestellt, welchem ein Jodfilter und ein Aerosolfilter 12 vorgeschaltet sind. Von den mehreren Verdünnungstufen werden im Prinzip nur die beiden ersten Stufen beheizt, da selbst bei reinem Dampf in der Reingasleitung 4 eine Taupunktsunterschreitung nach der zweiten Stufe nicht mehr möglich ist.

Eine in Fig.2 dargestellte Verdünnungsstufe funktioniert folgendermassen: Die bereitgestellte Druckluft umströmt durch einen Ringspalt 29 die Ansaugdüse 30 für das zu verdünnende Gasgemisch. Durch den dabei entstehenden Unterdruck wird das Aerosol mit einem gewissen Volumenstrom angesaugt und in der Mischkammer 31 homogen mit der Reinluft vermischt. Wird der Reinluft-Volumenstrom erhöht, so vergrössert sich in gleichem Masse die Strömungsgeschwindigkeit im Ringspalt. Dadurch wächst der Unterdruck an der Ansaugdüse, wodurch der Volumenstrom des Gasgemisches ebenfalls zunimmt. Beide Volumenströme sind somit über den Unterdruck gekoppelt und ihr Verhältnis bleibt auch für verschiedene Vordrücke konstant.

In der Verdünnungsanlage 8 wird eine Verdünnung von beispielsweise 1:10⁴ angestrebt. Dabei ist es vorteilhaft, die Verdünnung in mehreren Kaskaden zu bewerkstelligen, was den Luftbedarf an sauberer Verdünnungsluft verringert. Von der aus der Entnahmeleitung 8 entnommenen, verdünnten Probe wird nur ein Teil aus der Mischkammer 31 entnommen und der nächsten Stufe zugeführt. Diese Teilstromentnahme erfolgt über die Absaugdüse 32. Dabei ist darauf zu achten, dass diese Entnahme unter isokinetischen Bedingungen erfolgt. Diese liegen dann vor, wenn am Ort der Absaugung die Strömungsgeschwindigkeit in der Düse 32 gleich derjenigen im Strömungskanal ist. Über verschiedene Düsendurchmesser lassen sich verschiedene Absaugvolumenströme an verschiedene Gesamtvolumenströme anpassen. Dies ist für die letzte Stufe von Bedeutung. Als Beispiel sei vorgegeben, dass von der oben angegebenen gesamten Absaugmenge von 10 m³/h nur 0,3 m³/h zur Messung herangezogen werden. Nach der Verdünnung werden der Messapparatur aber insgesamt ca. 3 m³/h zugeführt. Die nach der isokinetischen Teilstrom-Entnahme verbleibende Restluft von 7,8 m³/h für alle Verdünnungsstufen strömt durch den Abluftstutzen 33 nach aussen in die Rückführleitung 9 (Fig.l). In dieser Rückführleitung wird der Rest der Probeluft und die Luft aus den Abluftstutzen 32 von einer Pumpe 10 zurück in die Reingasleitung 4 gefördert. Bei dieser Rückführung ist darauf zu achten, dass in der Mischkamner der Verdünnungsstufe kein Gegendruck entsteht, welcher das Verdünnungsverhältnis beinflussen könnte.

Durch die Verdünnung wird die Aktivität der abgeschiedenen Stoffe auf ein auch bei Normalbetrieb übliches Mass abgesenkt. Die Handhabung und Auswertung der Messapparatur kann somit auch im Störfall in üblicher Weise geschehen.

An die Absaugdüse 32 der letzten Stufe ist die Messleitung 13 (Fig.l) angeschlossen, welche zur eigentlichen Messstrecke 14 führt. Diese auch für den Normalbetrieb der Anlage vorgesehene, stark vereinfacht dargestellte Messstrecke 14 besteht zum einen aus einer Kombination 15 von Aerosol- und Jod- Bilanzierungsfiltern zur diskontinuierlichen Messung. Zur quasikontinuierlichen Überwachung sind ein Aerosolmonitor 16, ein Jodmonitor 36 und ein Edelgasmonitor 37 vorgesehen. Diese drei Monitoren sind mit je einem Strahlungsdetektor 38 ausgerüstet. Mit dieser blossen Anzeige wird die relative Aktivität der Aerosole erfasst. Sie bestimmt darüberhinaus die Wechselintervalle der Bilanzierungsfilter.

Im Normalbetrieb wird üblicherweise eine diskontinuierliche Messung über die Elemente 15 einmal pro Woche vorgenommen. Im Störfall hingegen ist vorgesehen, dass eine Messung alle 4 Stunden erfolgt. Hierzu werden die Bilanzierungsfilter ausgebaut, in einen separaten Raum gebracht und dort mittels Spektrometer nach spezifischen Nukliden ausgewertet.

Vorgängig der Messung wird die Messstrecke 14 durchgespült, damit die durch die Edelgaskomponenten verursachte Filteraktivität auf ein unmassgebliches Niveau herabgemindert wird und die eignetliche Messung nicht verfälscht. Hierzu wird die Messleitung 13 mittels eines Absperrorgans 34 verschlossen und die Spülluftleitung 17 mittels eines Absperrorgans 35 geöffnet. Über die Förderpumpe 19 wird athmosphärische Luft angesaugt und gelangt über Jod- und Aerosolfilter 18 in die Messstrecke. Ausgestossen wird die Spülluft in die Rückführleitung 9. Sie kann selbstverständlich auch direkt in den Kamin 5 abgeleitet werden.

Anlässlich der Messung selbst ist die Spülluftleitung 17 mit dem Absperrorgan 35 verschlossen und die Messleitung 13 mit dem Absperrorgan 34 geöffnet. Über die gleiche Förderpumpe 19 wird das zu messende Gemisch angesaugt. Da diese Pumpe für die grössere Spülluftmenge dimensioniert ist, wird im Falle der Messung zu Regelzwecken atmosphärische Luft mitangesaugt. Stromaufwärts der Pumpe befindet sich zu diesem Zweck in einer Zweigleitung ein Regelventil 20 mit vorgeschaltetem Aerosolfilter 21.

Vor der Einmündung der Teilmessstrecke mit dem Aerosolmonitor in jene mit den Bilanzierungsfiltern ist in letzterer ein Durchflussmessgerät 22 angeordnet. Die Durchflussmenge über die Aerosol- und Jodfilter wird dort gemessen und über die Bestaubungszeit intergriert. Auf diese Weise werden die Aktivitätskonzentrationswerte ermittelt. Um die Aktivitätsabgaberate abzuleiten, wird die Konzentration mit der Durchsatzmessung korreliert.

Obwohl, wie oben erwähnt, der Durchsatz auch in der Rohgasleitung gemessen wird, würde eine Korrelation mit dieser Messung zu falschen Ergebnissen führen. Denn bei Druckentlastung können gerade in der Anfangsphase die Durchsätze in der Rohgasleitung und in der Reingasleitung sehr unterschiedlich sein. Dies kann zum Beispiel bedingt sein durch Auskondensation des Dampfteils in der noch kalten Wasservorlage der Filteranlage 3. Demzufolge wird der Durchfluss ein weiteres Mal bei 23 in der Reingasleitung 4 bestimmt. Dies kann eine Venturi-Messung oder eine Bestimmung über eine Druck/Temperaturmessung sein. Das Ergebnis wird mit den Konzentrationswerten verknüpft, um die Aktivitäts-Abgaberaten zu ermitteln.

## Patentansprüche

1. Vorrichtung zur Überwachung der Kamin-Fortluft in einer Reaktoranlage, im wesentlichen bestehend aus einer Druckentlastungsleitung (2), welche ein Sicherheitsbehälter (1) mit ein Kamin (5) verbindet und in welcher eine Filteranlage (3) angeordnet ist, dadurch gekennzeichnet, daß stromabwärts des Filters eine Probeentnahme (6) vorgesehen ist, aus der Gasgemisch über eine Entnahmeleitung (7) abgezweigt wird, durch eine Messstrecke (14) geleitet wird und anschliessend zur Kamin-Fortluft zurückgeführt wird,und dass die Aktivitäts-Konzentration des Gases vor der Messstrecke (14) in einer Verdünnungsanlage (8) reduziert wird.

2. Vorrichtung nach Anspruch 1, dadurch gekennzeichnet, dass in der Entnahmeleitung (7) eine Heizung (24) vorgesehen ist, mit welcher vor der Verdünnung eine Abkühlung der Gasprobe verhindert wird.

3. Vorrichtung nach Anspruch 1, dadurch gekennzeichnet, dass die Verdünnung in mehreren Stufen erfolgt.

## Claims

1. Device for monitoring the stack exit air in a reactor installation, essentially consisting of a pressure relief line (2) which connects a containment vessel (1) to a stack (5) and in which a filter unit (3) is located, characterized in that a sampling point (6) is provided downstream of the filter, from where gas mixture is branched off via a sampling line (7), passed through a measurement section (14) and then returned to the stack exit air, and in that the activity concentration of the gas is reduced in a dilution unit (8) upstream of the measurement section (14).

2. Device according to Claim 1, characterized in that a heater (24), which prevents cooling of the gas sample before dilution, is provided in the sampling line (7).

3. Device according to Claim 1, characterized in that the dilution takes place in a plurality of stages.

## Revendications

1. Dispositif de surveillance de l'air d'éventage dans la cheminée d'une installation comportant un réacteur, se composant essentiellement d'une conduite de détente de pression (2), qui relie une cuve de sécurité (1) avec une cheminée (5) et dans laquelle est disposée une installation de filtrage (3), caractérisé en ce qu'en aval du filtre est prévu un dispositif de prélèvement d'échantillon (6), à partir duquel un mélange gazeux est dérivé par l'intermédiaire d'une conduite de soutirage (7), celui-ci est acheminé à travers un parcours de mesure (14) et est reconduit ensuite à l'air d'éventage dans la cheminée, et en ce que la concentration d'activité du gaz est réduite avant le parcours de mesure (14) dans une installation de dilution (8).

2. Dispositif selon la revendication 1, caractérisé en ce que, dans la conduite de soutirage (7) est prévu un dispositif de chauffage (24), avec lequel on empêche avant la dilution un refroidissement de l'échantillon de gaz.

3. Dispositif selon la revendication 1, caractérisé en ce que la dilution se fait en plusieurs étages.
